Europäisches Patentamt

European Patent Office

Office européen des brevets

(11) Veröffentlichungsnummer: **0 494 355 A2**

# (12) EUROPÄISCHE PATENTANMELDUNG

(21) Anmeldenummer: **91119121.1**

(22) Anmeldetag: **11.11.91**

(51) Int. Cl.5: **C08K 13/02**, C08J 3/00, //C08K9/12,(C08K13/02,3:34, 5:54)

(30) Priorität: **07.01.91 DE 4100217**

(43) Veröffentlichungstag der Anmeldung: **15.07.92 Patentblatt 92/29**

(84) Benannte Vertragsstaaten:
**BE DE ES FR GB IT LU NL**

(71) Anmelder: **DEGUSSA AG**
**Weissfrauenstrasse 9**
**W-6000 Frankfurt (Main)(DE)**

(72) Erfinder: **Görl, Udo, Dr.**
**Herderstrasse 38**
**W-5303 Bornheim-Roisdorf(DE)**
Erfinder: **Wolff, Siegfried, Dr.**
**Weiherstrasse 28**
**W-5303 Bornheim-Merten(DE)**

(54) **Mit Peroxiden vulkanisierbare Formmassen und ein Verfahren zur Herstellung.**

(57) Die Erfindung betrifft durch Wärmeeinwirkung mit Peroxiden vulkanisierbare Formmassen, die ein Thiocyanatopropyltrialkoxysilan enthalten, und ein Verfahren zu deren Herstellung.

Die Erfindung betrifft durch Wärmeeinwirkung mit Peroxiden vulkanisierbare Formmassen und ein Verfahren zur Herstellung.

Peroxidisch vernetzt werden müssen insbesondere Polymere, die über keine oder nur wenige Doppelbindungen im Molekül verfügen. Als wichtigste Typen sind hierbei zu nennen:

Ethylenvinylacetat (EVA), Ethylenpropylencopolymerisate (EPM), Ethylenpropylendiencopolymerisat (EPDM), Silikonkautschuk und Polyethylen.

Mit peroxidischer Vernetzung gelingt es, C-C-Brücken zwischen zwei Polymerketten zu erzeugen, die aufgrund ihrer hohen Bindungsenergie und der kurzen Bindungslänge für gutes Alterungs- und Satzverhalten (Compression Set) des Gummiartikels verantwortlich sind. Peroxidische Vernetzung wird deshalb auch dann angewandt, wenn extreme Anforderungen (z. B. Einsatz von Gummiartikeln in heißen aggresiven Medien) an den Artikel gestellt werden.

Besonders für technischen Artikel, z. B. Dichtungen, Walzen, Schläuche etc. aber auch für Schuhsohlen ist die bleibende Verformung (Compression Set) einer Mischung (gemessen nach ASTM D 395) als Faktor für die Maßhaltigkeit und damit für den Gebrauch dieses Artikels von großer Wichtigkeit, je niedriger der Compression Set, desto höher ist der Gebrauchswert des Gummierzeugnisses (z. B. Dichtigkeit einer Dichtung).

Eine Möglichkeit, diese Eigenschaft ebenso wie andere zu verbessern, liegt in der Verwendung von bifunktionellen Organosiliciumverbindungen.

Aus der DE-AS 23 28 630 ist ein Verfahren zur peroxidischen Vernetzung von Polyäthylen bekannt, bei dem man ein Polyäthylen mit einer einen olefinisch ungesättigten Rest enthaltenen Organosiliciumverbindung in Gegenwart einer freie Radikale liefernden Verbindung umsetzt und dieses Produkt dann mit einem Silanolkondensationskatalysator und Wasser behandelt.

In der Praxis werden für diesen Zweck praktisch ausschließlich Vinylsilane eingesetzt, die jedoch eine Reihe von Nachteilen aufweisen:

sie besitzen einen niedrigen Flammpunkt, und darüber hinaus wegen ihres niedrigen Siedepunkts eine hohe Flüchtigkeit, was sich bei den in der Gummiindustrie eingesetzten Temperaturen als problematisch erweist, besonders beim Einmischen, wenn das Silan noch nicht auf dem als Verstärker eingesetzten Füllstoff gebunden vorliegt. Als weitere Nachteile der Verwendung von Vinylsilanen ergeben sich kurze Bruchdehnungen, äußerst schlechte Weiterreißwiderstände, niedrige Bruchenergien und ein schlechtes Ermüdungsverhalten in den jeweiligen Vulkanisaten.

Aufgabe der Erfindung sind peroxidisch vernetzbare (vulkanisierbare) Formmassen, bei denen diese Nachteile weitgehend vermieden werden, gleichzeitig jedoch ein Compression Set gefunden wird, wie er bei Einsatz der Vinylsilane üblich ist.

Gegenstand der Erfindung sind durch Wärmeeinwirkung mit Peroxiden vulkanisierbare Formmassen bestehend aus mindestens einem Polymeren, üblichen Hilfsmitteln, silikatischem Füllstoff und einer Organosiliciumverbindung, die dadurch gekennzeichnet sind,, daß sie als Organosiliciumverbindung 0,1 bis 50 Gew.-Teile, bevorzugt 1-15 Gew.-Teile bezogen auf 100 Gew.-Teile Polymer, eines Thiocyanatopropyltrialkoxysilans der Formel (I)

$(RO)_3 Si-(CH_2)_3-SCN$ enthalten,

in der R einer Alkylgruppe mit 1 bis 8 Kohlenstoffatomen entspricht.

Die grundsätzliche Zusammensetzung von peroxidisch vulkanisierbaren Formmassen ist dem Fachmann bekannt.

Bei den Polymeren handelt es sich vor allem um Ethylenvinylacetat (EVA), Ethylenpropylencopolymerisate (EPM), Ethylenpropylendiencopolymerisat (EPDM), Silikonkautschuk und Polyethylen oder deren Mischungen, soweit sie miteinander mischbar sind.

Beispiele für Vernetzungsmittel sind:

1,1-Bis-(tert.-butylperoxy)-3,3,5-trimethylcyclohexan,

tert.-Butylperoxyisopropylcarbonat,

tert.-Butylperoxybenzoat,

Dicumylperoxyd,

$\alpha$-$\alpha$-Bis-(tert.-butylperoxy)-diisopropylbenzol,

2,5-Dimethyl-2,5-di-(tert.-butylperoxy)-hexan,

2,5-Dimethyl-2,5-di-(tert.-butylperoxy)-hexin-3,

Di-tert.-butylperoxyd und dergleichen,

die in einer Menge von etwa 1 bis 10 Gew.-Teilen pro 100 Gew.-Teilen des Polymeren eingesetzt werden.

Die Formmassen enthalten in der Regel allgemein bekannte natürliche oder synthetische silikatische Füllstoffe (z. B. Clays, Kaoline, gefällte und pyrogene Kieselsäuren, Silikate etc.) mit BET-Oberflächen (gemessen mit Stickstoff) zwischen 1 und 1000 m²/g, bevorzugt 5 bis 300 m²/g, mit deren Hydroxylgruppen die Trialkoxysilylgruppen der erfindungsgemäß eingesetzten Verbindungen unter Abspaltung eines Alkohols reagieren und so zu einer chemischen Bindung zwischen Füllstoff und Silan führen.

Eingesetzt werden im allgemeinen 5 bis 250 Gew.-Teile, bevorzugt 20 bis 100 Gew.-Teile, bezogen auf 100 Gew.-Teile des Polymeren.

Der Füllstoff wird entweder getrennt oder zusammen mit der Organosiliciumverbindung eingemischt.

Zu diesem Zweck kann man eine Vormischung verwenden oder einen mit der Organosiliciumverbindung umgesetzten Füllstoff.

Verfahren zur Herstellung derartig modifizierter Füllstoffe sind in derEP-PS 0 177 674 und der deutschen Anmeldung P 40 04 781.4 beschrieben. Werden die erfindungsgemäß einzusetzenden Verbindungen der zu vulkanisierenden Mischung in situ zugegeben, oder auch in modifizierter Form, so führt dies zu einer Erniedrigung der Viskosität der Mischung und damit zu einer besseren Verarbeitbarkeit.

Die erfindungsgemäßen vulkanisierbaren Formmassen werden nach den allgemein bekannten Verfahren hergestellt.

Man vermischt die Komponenten - bis auf das peroxidische Vernetzungsmittel- in beliebiger Reihenfolge, bis man eine homogene Mischung erreicht hat.

Nach der Zugabe des Peroxids und der entsprechenden Temperaturerhöhung setzt dann die Vulkanisation ein. Zu den herkömmlichen Komponenten, wie sie allgemein verwendet werden, gehören z. B. Alterungsschutzmittel, Weichmacher, Verarbeitungshilfsmittel, Stabilisatoren, Pigmente sowie auch weitere Organosiliciumverbindungen anderer Struktur.

Es hat sich gezeigt, daß die erfindungsgemäßen Formmassen in Bezug auf die Compression Set-Werte mit solchen vergleichbar sind, die Vinylsilane enthalten. Verbesserungen ergeben sich durch die bedeutend längere Bruchdehnung, die höhere Bruchenergie, die besseren Weiterreißwiderstände und das bessere Ermüdungsverhalten der erfindungsgemäßen vulkanisierten Formmassen.

Die nachfolgenden Beispiele machen die Vorteile der erfindungsgemäen Formmassen gegenüber dem Stand der Technik deutlich.

| Prüfnorm für die Auswertung: | | |
|---|---|---|
| | Prüfmethode | Einheit |
| Zugfestigkeit | DIN 53 504 | MPa |
| Bruchdehnung | DIN 53 504 | min |
| Bruchenergie | DIN 53 504 | J |
| Weiterreißwiderstand | DIN 53 507 | N/mm |
| Mooney Viskosität | DIN 53 523/524 | ME (Mooney-Einh) |
| Compression Set B | ASTM D 395 | % |
| De Mattia | ASTM D 813 | Kc |

In den Anwendungsbeispielen werden folgende Namen und Abkürzungen benutzt, deren Bedeutung hier aufgeführt wird:

| Buna AP 451 | EPDM der Firma Bayer |
|---|---|
| Keltan 778 | EPDM der Firma DSM |
| Perkadox 14/40 | 1,3-Bis(tert.-butyl-peroxyl-isopropyl) -benzol |
| A 172 | Triethoxyvinylsilan von UCC |
| Si 264 | 3-Thiocyanatopropyltriethoxysilan |
| Durosil | gefällte Kieselsäure von Degussa (BET = 60 m²/g) |
| TRIM | Aktivator |
| Flexon 876 | paraffinischer Weichmacher |
| Protector G 3108 | Ozonschutzwachs |
| Weißöl 530 | paraffinischer Weichmacher |
| Suprex Clay | Aluminiumsilikat |
| Vulkanox HS | 2,2,4-Trimethyl-1,2-dihydrochinolin |
| Winnofil S | gefälltes Calciumcarbonat |

BEISPIEL 1: Si 264 in einer peroxidisch vernetzten Kabelmantelmischung auf Basis EPDM gegen eine Mischung ohne Silan

|  |  | 1 | 2 |
|---|---|---|---|
| Keltan 778 |  | 100 | 100 |
| Weißöl |  | 10 | 10 |
| Winnofil S |  | 50 | 50 |
| Suprex Clay |  | 100 | 100 |
| Flexon 876 |  | 25 | 25 |
| ZnO RS |  | 5 | 5 |
| Protector G 3108 |  | 5 | 5 |
| Vulkanox HS |  | 1 | 1 |
| TRIM |  | 1,5 | 1,5 |
| Si 264 |  | – | 2 |
| Perkadox 14/40 |  | 5 | 5 |
| Mooney Viskosität ML 4 (100 °C) | ME | 64 | 57 |

Vulkanisatdaten: 180 °C/t$_{95\%}$

| Modul 300 % | MPa | 4,2 | 7,8 |
|---|---|---|---|
| Compression Set  22 h/ 70 °C | % | 20,8 | 16,3 |
|                 70 h/100 °C | % | 20,0 | 14,1 |

Si 264 führt zu einer Verbesserung des Verarbeitungsverhaltens, zu einer Erhöhung des Moduls und zu einer Verbesserung der Compression Set-Werte.

BEISPIEL 2: Si 264 in einer peroxidisch vernetzten EPDM-Mischung (Computer Pads) gegen Vinylsilan

4

|  | | 1 | 2 |
|---|---|---|---|
| Buna AP 451 | | 100 | 100 |
| Durosil | | 60 | 60 |
| A 172 | | 1 | – |
| Si 264 | | – | 1 |
| Perkadox 14/40 | | 4 | 4 |

Vulkanisatdaten: 180 $^{\circ}$C/$t_{95\%}$

| | | 1 | 2 |
|---|---|---|---|
| Zugfestigkeit | MPa | 12,1 | 13,3 |
| Bruchdehnung | % | 120 | 210 |
| Bruchenergie | J | 20,6 | 41,7 |
| Weiterreißwiderstand | N/mm | 8 | 15 |
| Compression Set 70 h/100 $^{\circ}$C | % | 7,2 | 6,8 |

Ermüdungsverhalten – De Mattia
Rißbildung ohne Einstich

| | 1 | 2 |
|---|---|---|
| Kilozyklus bis zur Rißlänge 25 mm | 0,100 | 0,7 |

Si 264 besitzt gegenüber Vinylsilan bei nahezu gleichem Compression Set-Wert eine deutlich längere Bruchdehnung, ein besseres Ermüdungsverhalten, eine höhere Bruchenergie und einen besseren Weiterreißwiderstand.

**Patentansprüche**

1. Durch Wäremeeinwirkung mit Peroxiden vulkanisierbare Formmassen bestehend aus mindestens einem Polymeren, üblichen Hilfsmitteln, silikatischem Füllstoff und einer Organosiliciumverbindung, dadurch gekennzeichnet, daß sie als Organosiliciumverbindung 0,1 bis 50 Gew.-Teile, bezogen auf 100 Gew.-Teile Polymer, eines Thiocyanatopropyltrialkoxysilans der Formel (I)

$(RO)_3Si-(CH_2)_3-SCN$    enthalten,

in der R einer Alkylgruppe mit 1 bis 8 Kohlenstoffatomen entspricht.

2. Verfahren zur Herstellung von Formmassen nach Anspruch 1,
dadurch gekennzeichnet, daß man 0,1 bis 50 Gew.-Teile einer Verbindung gemäß Formel (I) entweder getrennt von oder umgesetzt oder abgemischt mit dem silikatischen Füllstoff in die Formmasse einarbeitet und darin gleichmäßig verteilt.